# EUROPEAN PATENT SPECIFICATION

(11) **EP 3 175 743 B1**
(45) Date of publication and mention of the grant of the patent: **27.05.2020**
(21) Application number: 15827591.7
(22) Date of filing: 03.07.2015
(51) Int. Cl.: A47J 19/00, A23N 1/00

(54) **DRUM ASSEMBLY HAVING PULP DISCHARGE CONTROL DEVICE, AND JUICER INCLUDING SAME**
TROMMELANORDNUNG MIT PULPENENTLADUNGSSTEUERUNGSVORRICHTUNG UND ENTSAFTER DAMIT
ENSEMBLE TAMBOUR COMPORTANT UN DISPOSITIF DE COMMANDE D'ÉVACUATION DE PULPE ET CENTRIFUGEUSE COMPRENANT CET ENSEMBLE

(30) Priority: 30.07.2014 KR 20140097191; 11.08.2014 KR 20140103724; 15.01.2015 KR 20150007397
(43) Date of publication of application: 07.06.2017
(73) Proprietor: Coway Co., Ltd., Gongju-si, Chungcheongnam-do 314-895 (KR)
(72) Inventor: LEE, Nam Ho, Seoul 151-919 (KR); PARK, Man Uk, Seoul 151-919 (KR); CHANG, Min Suk, Seoul 151-919 (KR)
(74) Representative: Kador & Partner PartG mbB
(86) International application number: PCT/KR2015/006889
(87) International publication number: WO 2016/017949

(56) References cited:
- EP-A2- 2 510 842
- EP-A2- 2 510 842
- WO-A2-2012/036454
- WO-A2-2014/068231
- CN-A- 1 814 351
- KR-A- 20060 101 848
- KR-A- 20080 090 220
- KR-A- 20130 042 991
- US-A- 4 363 265

## Description

### BACKGROUND

### 1. Field of the Invention

Embodiments of the present disclosure relate to a drum assembly having a pulp discharge adjusting apparatus, and a juicer comprising the same, and more particularly, to a drum assembly having a pulp discharge adjusting apparatus for adjusting an amount of pulps discharged from a drum body according to a type of a subject being extracted or a user preference, and a juicer comprising the same.

### 2. Description of the Related Art

Juicers are electronic appliances used to directly squeeze out fruit juice or vegetable juice from fruits or vegetables for drinks. A variety of juicers are introduced to help home users to conveniently extract juice from vegetables or fruits for their healthy lives.

Generally, a juicer receives a subject being extracted (e.g., fruit or vegetable) in a drum in which an extraction screw is rotatably mounted, and crushes the subject being extracted and squeezes out juice therefrom by rotating the extraction screw with a driving portion located under the drum. After crushing and squeezing by the extraction screw, the subject being extracted is separated by an extraction net into juice and pulp, then the separated juice and pulp are expelled out through a juice discharge port and a pump discharge port, respectively.

The technologies related to adjustment of pulp discharge or adjustment of extraction is known in the art. For example, Korean Patent Publication No. 2013-0028535 discloses a juicer having a pulp opening and closing equipment, and US Patent Publication No. 2007-0277682 discloses a juicer capable of adjusting an amount of juice extraction with a wetness control unit.

EP Patent Publication EP 2 510 842 A2 discloses a juicer including: a lid having a feed tube; a feed screw having a rotating shaft and feeding input food downwards while cutting, crushing and squeezing the food; a housing having a juice outlet and a residue outlet on an outer surface, with a housing discharge hole formed in the bottom of the housing and communicating with the residue outlet; a net drum having an entirely or partially meshed sidewall, with a net drum discharge hole formed in the net drum and communicating with the residue outlet; a motor unit having a housing seat and a drive shaft for rotating the feed screw; and a juice control unit for opening or closing the juice outlet. While in operation, input food circulates through the upper and lower portions of the net drum while being cut, crushed or squeezed, and residue collects in the net drum.

However, most juicers of the related technologies have limited accuracy or convenience in the adjustment of pulp discharge, or it is difficult to separate and clean the components associated with pulp discharge.

### [Related Arts]

Korean Patent Publication No. 2013-0028535 (March 19, 2013)

US Patent Publication No. 2007-0277682 (December 6, 2007.12)

EP Patent Publication EP 2 510 842 A2 (October 17, 2012)

### SUMMARY

Exemplary embodiments of the present inventive concept overcome the above disadvantages and other disadvantages not described above. Also, the present inventive concept is not required to overcome the disadvantages described above, and an exemplary embodiment of the present inventive concept may not overcome any of the problems described above.

Accordingly, it is a main object of the present invention to provide a method for enhancing convenience of cleaning components associated with pulp discharge, while also enhancing accuracy and convenience of adjusting pulp discharge.

According to an exemplary embodiment, a drum assembly for a juicer is provided, in which comprises a drum body having a juice discharge port and at least one pulp discharge port, and a pulp discharge adjusting apparatus mounted on the pulp discharge port to adjust an amount of pulp discharge.

The pulp discharge adjusting apparatus further comprises a discharge resistance exerting member installed in the pulp discharge port to exert a discharge resistance on a pulp being discharged through the pulp discharge port, and having an elastically deformable portion which is elastically deformable by pressing of the pulp being discharged, and a discharge resistance adjusting member operated by a user to adjust the discharge resistance.

The pulp discharge adjusting apparatus even further comprises a connecting member coupled with the discharge resistance exerting member and the discharge resistance adjusting member, respectively, and guiding a movement of the discharge resistance adjusting member during adjustment of the discharge resistance.

The discharge resistance adjusting member is coupled with the connecting member such that the discharge resistance adjusting member is slidable between a first position of contacting an outer surface of the elastically deformable portion and a second position of being spaced from the outer surface of the elastically deformable portion.

The connecting member is attachable to or detachable from the pulp discharge port in a state of being coupled with the discharge resistance exerting member and the discharge resistance adjusting member.

The discharge resistance adjusting member may be disposed to be in contact with an upper region of the elastically deformable portion and is rotatably coupled with the connecting member, and the discharge resistance adjusting member may have a shape with a variable distance between a lower end of the discharge resistance adjusting member and a lower end of the elastically deformable portion according to a rotation thereof.

The discharge resistance adjusting member may have a shape of a ring penetrated by the connecting member, and an outer circumferential surface of the discharge resistance adjusting member may comprise a plurality of flat edge surfaces at different distances from an axis of rotation.

The discharge resistance adjusting member may comprise an operating portion rotatably coupled with the connecting member and partially exposed outside the pulp discharge port, and a contacting portion provided on an inner end of the operating portion and disposed to be in contact with the upper region of the elastically deformable portion.

The contacting portion may be provided as a plate shape, and an outer circumferential surface of the contacting portion comprises a plurality of flat edge surfaces at different distances from an axis of rotation.

The contacting portion may be provided as a plate shape, and an outer circumferential surface of the contacting portion is formed as a curved surface at a variable distance from an axis of rotation.

The pulp discharge adjusting apparatus may comprise an opening/closing member for opening and closing a pulp discharge opening of the drum body, and an operating member coupled with the opening/closing member and rotatably mounted on the pulp discharge port. An opening degree of the pulp discharge opening by the opening/closing member may be adjusted according to the rotation of the operating member.

The pulp discharge port may have a shape with an open upper side, the operating member may be disposed within the pulp discharge port, and the operating member may have a protecting protrusion provided on one side to prevent a finger from entering the pulp discharge opening.

The drum body may comprise a first pulp discharge port in fluid communication with the first pulp discharge opening, and a second pulp discharge port in fluid communication with the second pulp discharge opening and disposed over the juice discharge port, and a first and a second pulp discharge adjusting apparatuses may be installed in the first and the second pulp discharge ports, respectively.

The first pulp discharge adjusting apparatus may comprise a discharge resistance exerting member installed in the pulp discharge port to exert discharge resistance on a pulp being discharged through the first pulp discharge port, and having an elastically deformable portion which is elastically deformable by pressing of the pulp being discharged, and a discharge resistance adjusting member operated by a user to adjust the discharge resistance.

The second pulp discharge adjusting apparatus may comprise an opening/closing member for opening and closing the second pulp discharge opening, and an operating member coupled with the opening/closing member and rotatably mounted on the second pulp discharge port. An opening degree of the second pulp discharge opening may be adjusted by the opening/closing member according to a rotation of the operating member.

### BRIEF DESCRIPTION OF THE DRAWINGS

The above and/or other aspects of the present inventive concept will be more apparent by describing certain exemplary embodiments of the present inventive concept with reference to the accompanying drawings, in which:
FIG. 1 is a perspective view of a drum assembly according to a first exemplary embodiment of the present invention;
FIG. 2 is an exploded perspective view of a drum assembly according to the first exemplary embodiment;
FIG. 3 is a cross sectional view of the drum assembly according to the first exemplary embodiment;
FIG. 4 is a cross sectional view provided to explain a principle of operation of the drum assembly according to the first exemplary embodiment;
FIG. 5 is a perspective view of a drum assembly according to a second exemplary embodiment of the present invention;
FIG. 6 is an exploded perspective view of the drum assembly according to the second exemplary embodiment;
FIG. 7 is a cross sectional view of the drum assembly according to the second exemplary embodiment;
FIG. 8 is a side view of a pulp discharge adjusting member provided in the drum assembly according to the second exemplary embodiment;
FIG. 9 is a cross sectional view provided to explain a principle of operation of the drum assembly according to the second exemplary embodiment;
FIG. 10 is a perspective view of a drum assembly according to a third exemplary embodiment of the present invention;
FIG. 11 is an exploded perspective view of the drum assembly according to the third exemplary embodiment;
FIG. 12 is a perspective view of a pulp discharge adjusting apparatus provided in the drum assembly according to the third exemplary embodiment;
FIG. 13 is a view provided to explain a principle of operation of the drum assembly according to the third exemplary embodiment;
FIG. 14 is a perspective view of a pulp discharge adjusting apparatus according to a fourth exemplary embodiment of the present invention;
FIG. 15 is an exploded perspective view of the pulp discharge adjusting apparatus according to the fourth exemplary embodiment;
FIG. 16 is a view provided to explain a principle of operation of the pulp discharge adjusting apparatus according to the fourth exemplary embodiment;
FIG. 17 is a perspective view of a pulp discharge adjusting apparatus according to a fifth exemplary embodiment of the present invention;
FIG. 18 is an exploded perspective view of the drum assembly according to the fifth exemplary embodiment;
FIG. 19 is a view provided to explain a principle of operation of the pulp discharge adjusting apparatus according to the fifth exemplary embodiment;
FIG. 20 is a perspective view of a drum assembly according to a sixth exemplary embodiment of the present invention;
FIG. 21 is another perspective view of the drum assembly according to the sixth exemplary embodiment;
FIG. 22 is a perspective view of a first pulp discharge adjusting apparatus according to the sixth exemplary embodiment;
FIG. 23 is another perspective view of the first pulp discharge adjusting apparatus according to the sixth exemplary embodiment;
FIG. 24 is a cross sectional view of the drum assembly according to the sixth exemplary embodiment;
FIG. 25 is a view provided to explain a principle of operation of the first pulp discharge adjusting apparatus according to the sixth exemplary embodiment;
FIG. 26 is a perspective view of a second pulp discharge port in closed state, according to the sixth exemplary embodiment;
FIG. 27 is a perspective view of the second pulp discharge port in an open state, according to the sixth exemplary embodiment;
FIG. 28 is a cross sectional view of the second pulp discharge port in a closed state, according to the sixth exemplary embodiment; and
FIG. 29 is a cross sectional view of the second pulp discharge port in an open state, according to the sixth exemplary embodiment.

### DETAILED DESCRIPTION OF EXEMPLARY EMBODIMENTS

Certain exemplary embodiments of the present inventive concept will now be described in greater detail with reference to the accompanying drawings.

### First exemplary embodiment

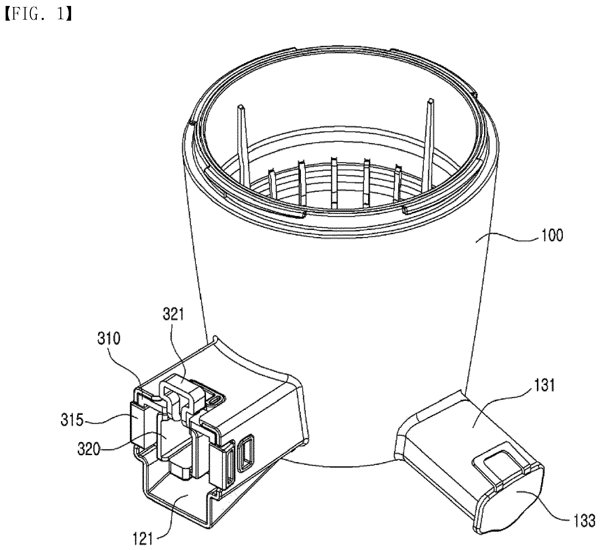

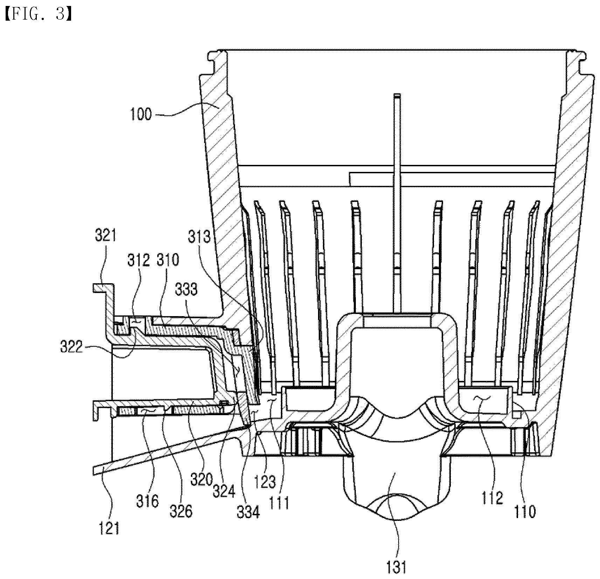

Referring to FIGS. 1 to 4, a drum assembly according to a first exemplary embodiment will be described.

According to the first exemplary embodiment, the drum assembly includes a drum body 100 and a pulp discharge adjusting apparatus 300.

The drum body 100 is a hollow cylindrical container structure having a space defined therein, and receives an extraction screw (not illustrated) therein.

The drum body 100 includes a guide jaw 110 protruding from an inner bottom surface with a circular cross section of a predetermined diameter, a first guide groove 111 formed on an outer side of the guide jaw 110, a second guide groove 112 formed on an inner side of the guide jaw 110, a pulp discharge opening 123 formed on an outermost side of the first guide groove 111, a pulp discharge port 121 for guiding pulp expelled into the pulp discharge opening 123 to outside, a juice discharge opening (not illustrated) formed on an outermost side of the second guide groove 112, and a juice discharge port 131 for guiding juice expelled through the juice discharge opening to outside.

The pulp discharge port 121 and the juice discharge port 131, respectively in fluid communication with the pulp discharge opening 123 and the juice discharge opening (not illustrated), extend outside the drum body 100. The pulp and the juice can be easily discharged out of the drum body 100 through the pulp discharge port 121 and the juice discharge port 131.

The subject being extracted is separated into juice and pulp by the rotational force while it is passed through the extraction screw. Once separated, the separated juice is moved along the second guide groove 112, and then, discharged out of the drum body 100 through a juice discharge opening (not illustrated) and the juice discharge port 131. The separated pulp is moved along the second guide groove 111, and then, discharged out of the drum body 100 through the pulp discharge opening 123 and the pulp discharge port 121.

Meanwhile, the juice discharge port 131 is provided with a lid 133 to open or close the juice discharge port 131. For cleaning operation of the drum body 100, the process can be conveniently performed by closing the juice discharge port 131 with the lid 133 and introducing a cleansing liquid into the drum body 100.

According to the first exemplary embodiment, the pulp discharge adjusting apparatus 300 includes a discharge resistance exerting member 330, a discharge resistance adjusting member 320, and a connecting member 310.

The discharge resistance exerting member 330 exerts discharge resistance on the pulp as the pulp is discharged through the pulp discharge port 121. The discharge resistance exerting member 330 may be disposed within a pulp discharge port 121, for example, immediately in front of the pulp discharge opening 123.

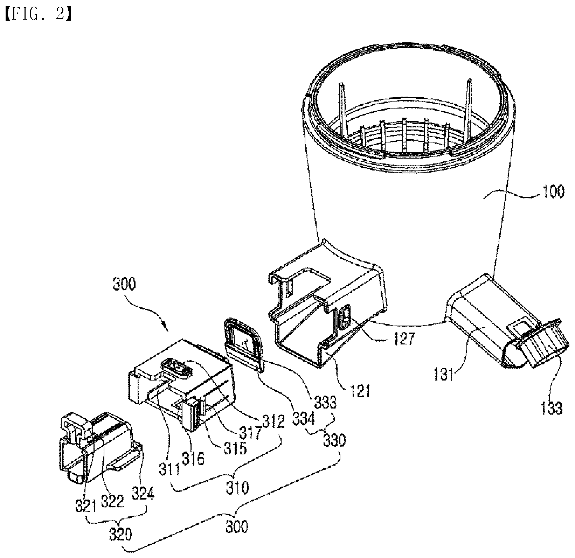

The discharge resistance exerting member 330 includes an insertion hole 333 for coupling an elastically deformable portion 334 which is elastically deformable by the pressure of the pulp being discharged, and the connecting member 310. As illustrated in FIG. 2, the discharge resistance exerting member 330 may be formed into a slender bar, and the connecting member 310 and the discharge resistance exerting member 330 may be coupled with each other, as an inserting portion 313 formed on an inner end of the connecting member 310 is inserted into the insertion hole 333.

Such coupling between the discharge resistance exerting member 330 and the connecting member 310 allows the pulp discharge adjusting apparatus 300 to be attached to and detached from the pulp discharge port 121 at once. Accordingly, it is easy to attach and detach the pulp discharge adjusting apparatus 300, and it is also easy to clean the drum body 100 and the pulp discharge adjusting apparatus 300.

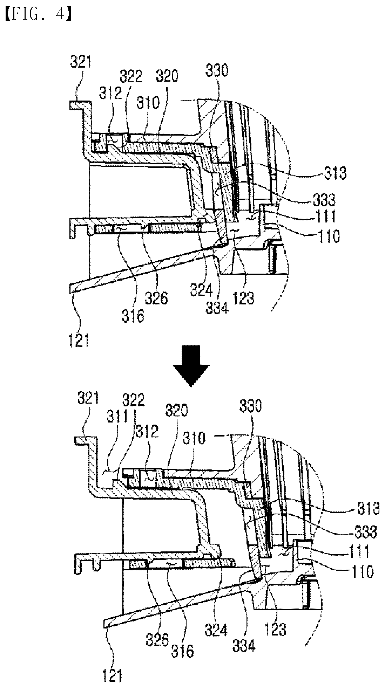

The discharge resistance adjusting member 320 is operated by a user to adjust the discharge resistance exerted by the discharge resistance exerting member 330 on the discharging pulp. The discharge resistance adjusting member 320 is slidably coupled with the connecting member 310 so that the discharge resistance adjusting member 320 is slid between a first position at which the discharge resistance adjusting member 320 is contacted with an outer surface of the elastically deformable portion 334 of the discharge resistance exerting member 330 (see FIG. 4, upper half), and a second position at which the discharge resistance adjusting member 320 is spaced from the outer surface of the elastically deformable portion 334 (see FIG. 4, lower half).

An adjusting protrusion 324 is formed on an inner end of the discharge resistance adjusting member 320. The adjusting protrusion 324 may selectively contact the elastically deformable portion 334 of the discharge resistance exerting member 330 which forms a lower side. More specifically, when the discharge resistance adjusting member 320 is slid from the second position to the first position, the adjusting protrusion 324 contacts the elastically deformable portion 334, while, on the contrary, i.e., when the discharge resistance adjusting member 320 is slid from the first position to the second position, the adjusting protrusion 324 is spaced away from the elastically deformable portion 334.

When the adjusting protrusion 324 contacts the elastically deformable portion 334, the movement of the elastically deformable portion 334 is restricted due to the adjusting protrusion 324 (see FIG. 4, upper half), which accordingly increases the discharge resistance of the elastically deformable portion 334.

An operating portion 321 is positioned on an upper side of the discharge resistance adjusting member 320, and the user may control the sliding movement of the discharge resistance adjusting member 320 with the operating portion 321. By moving the discharge resistance adjusting member 320 to thus bring the adjusting protrusion 324 into contact with the elastically deformable portion 334, the operating portion 321 may be received in an operating portion groove 311 formed in the connecting member 310. An upper protrusion 322 is formed on the upper surface of the discharge resistance adjusting member 320. The discharge resistance adjusting member 320 may be fixed in the first position described above (see FIG. 4, lower half), as the upper protrusion 322 is inserted into an upper groove 312 formed on the upper portion of the connecting member 310.

When the discharge resistance adjusting member 320 is moved to the second position described above (see FIG. 4, lower half), the movement of the elastically deformable portion 334 is not restricted, which accordingly reduces the discharge resistance of the discharge resistance exerting member 330.

The connecting member 310 is coupled with the discharge resistance exerting member 330 and the discharge resistance adjusting member 320, respectively, and guides the movement (i.e., sliding) of the discharge resistance adjusting member 320 between the first position and the second position.

The connecting member 310 may be in the state of being coupled with the discharge resistance exerting member 330 and the discharge resistance adjusting member 320, when the connecting member 310 is attached to or detached from the pulp discharge port 121. That is, the pulp discharge adjusting apparatus 300 that includes the discharge resistance exerting member 330, the discharge resistance adjusting member 320 and the connecting member 310 may be attached to or detached from the pulp discharge port 121 in an assembled state. Accordingly, it is convenient to attach and detach the pulp discharge adjusting apparatus 300 to and from the pulp discharge port 121.

The connecting member 310 includes a lower groove 316, and the discharge resistance adjusting member 320 includes a lower protrusion 326 to be inserted into the lower groove 316. When the discharge resistance adjusting member 320 is moved from the first position to the second position, the lower protrusion 326 inserted into the lower groove 316 can prevent the separation of the discharge resistance adjusting member 320 from the connecting member 310.

The connecting member 310 includes a mounting portion 315 and a side protrusion 317 on both sides for the mounting to the pulp discharge port 121. The pulp discharge port 121 includes a recess on a leading end for coupling with the mounting portion 315, and a fixing groove 127 for coupling with the side protrusion 317. The coupling of the side protrusion 317 with the fixing groove 127 allows the pulp discharge adjusting apparatus 300 to be stably fixed to the pulp discharge port 121.

### Second exemplary embodiment

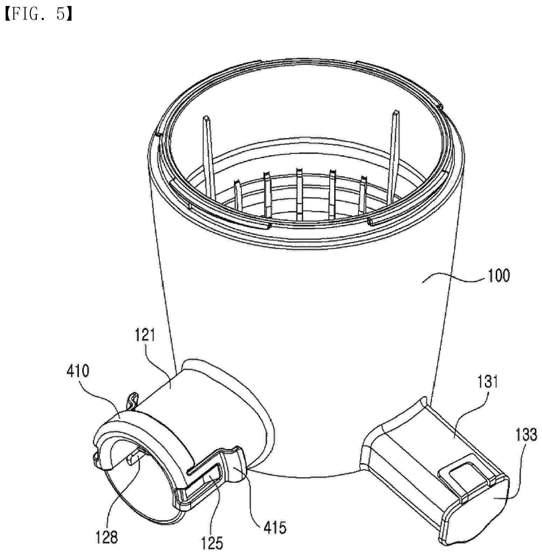

A drum assembly according to a second exemplary embodiment will be explained below with reference to FIGS. 5 to 9.

According to the second exemplary embodiment, the drum assembly includes a drum body 100, and a pulp discharge adjusting apparatus 400.

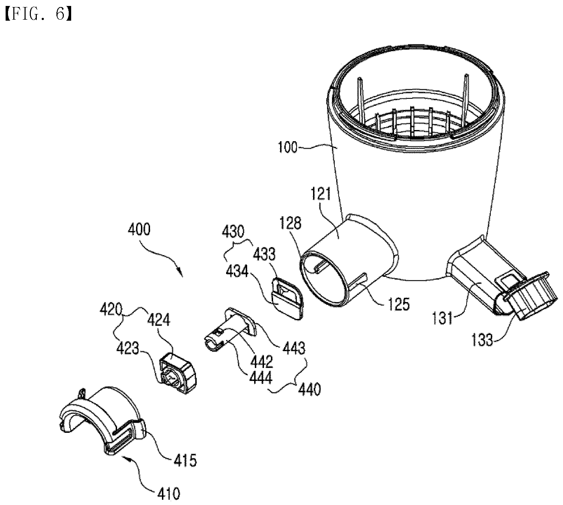

As in the case of the drum body 100 according to the first exemplary embodiment, the drum body 100 according to the second exemplary embodiment includes a pulp discharge port 121 and a juice discharge port 131. As illustrated in FIGS. 5 and 6, the pulp discharge port 121 according to the second exemplary embodiment is formed into an approximately cylindrical shape, and includes a support 128 formed inside, and a fixing protrusion 125 formed outside.

According to the second exemplary embodiment, the pulp discharge adjusting apparatus 400 includes a discharge resistance exerting member 430, a connecting portion 440 and a discharge resistance adjusting member 420, and a mounting member 410.

The discharge resistance exerting member 430 exerts discharge resistance on the pulp discharged through the pulp discharge port 121, and may be disposed to face the pulp discharge opening 123, for example.

The discharge resistance exerting member 430 includes an elastically deformable portion 434, and an insertion hole 433 for coupling of the elastically deformable portion 434 and the connecting member 440. For example, the discharge resistance exerting member 430 may be formed into a thin film. The connecting member 440 and the discharge resistance exerting member 430 may be coupled with each other, as an inserting portion 443 of the connecting member 440 is inserted into the insertion hole 433.

The connecting member 440 includes the inserting portion 443, and a shaft portion 444 extending from an outer surface of the inserting portion 443. The connecting member 440 and the discharge resistance exerting member 430 may be coupled with each other, as the inserting portion 443 of the connecting member 440 is inserted into the insertion hole 433. The shaft portion 444 has a cylindrical shape and has a coupling hole 442 formed on an upper surface thereof.

The discharge resistance adjusting member 420 is provided to adjust the discharge resistance of the discharge resistance exerting member 430, and is operated by the user to adjust the discharge resistance.

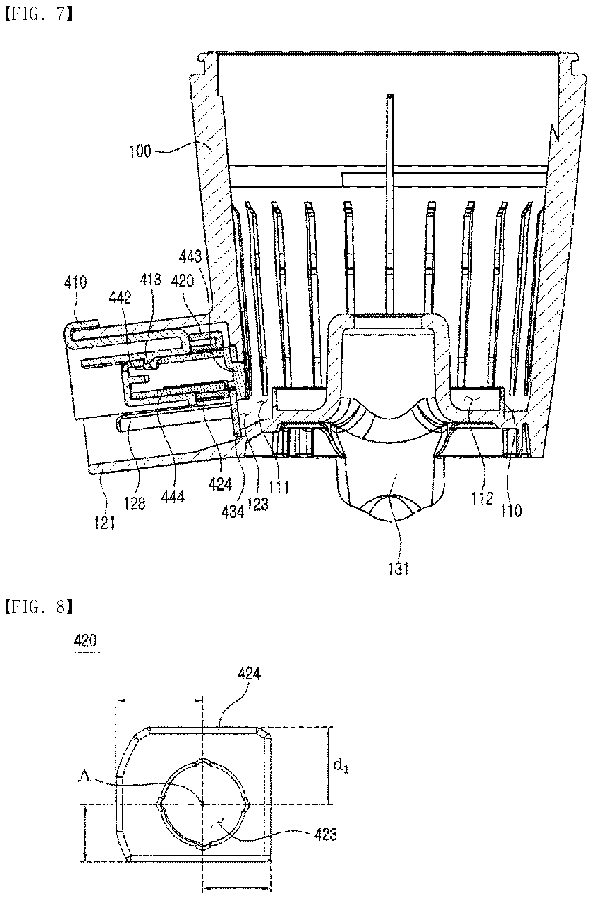

The discharge resistance adjusting member 420 has a shaft insertion hole 423 on a center, to which the shaft portion 444 of the connecting member 440 is inserted. As illustrated in FIG. 7, the discharge resistance adjusting member 420 is rotatably coupled with the connecting member 440 to be rotated about the shaft portion 440, and is so disposed that the discharge resistance adjusting member 420 is contacted, in the coupled state, to an upper region of the elastically deformable portion 434 of the discharge resistance exerting member 430.

The discharge resistance adjusting member 420 is formed into an approximately square ring shape. As an example, an outer circumferential surface 424 of the discharge resistance adjusting member 420 may be configured with a plurality of flat edge surfaces at different distances from an axis of rotation A.

Referring to an example of FIG. 8, the outer circumferential surface 424 of the discharge resistance adjusting member 420 may include four flat edge surfaces which are at different distances from the axis of rotation A.

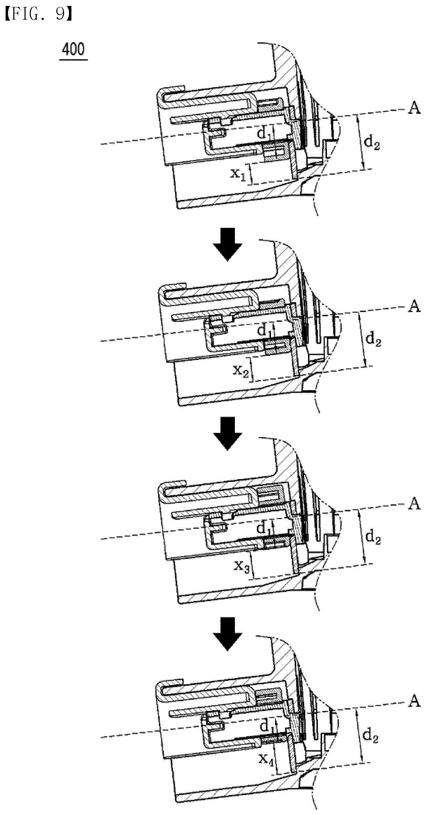

In FIG. 8, the reference symbol d1 denotes distances between the axis of rotation A and respective flat edge surfaces, and in FIG. 9, the reference symbol d2 denotes a distance between the axis of ration A and a lower end of the elastically deformable portion 434, in which d2 is preferably larger than d1. In FIG. 9, reference symbols x1, x2, x3, x4 denote differences between d1 and d2 for each of the four flat edge surfaces, which are perpendicular widths of the elastically deformable area of the elastically deformable portion 434 which is not in contact with the discharge resistance adjusting member 420.

Referring to FIG. 9, as the discharge resistance adjusting member 420 is rotated, the distances x1, x2, x3, x4 vary between the lower ends (i.e., one of the flat edge surfaces) of the discharge resistance adjusting member 420 and the lower end of the elastically deformable portion 434. These variations in the distances x1, x2, x3, x4 indicate that the discharge resistance of the discharge resistance exerting member 430 varies, and increase in these distances x1, x2, x3, x4 indicates that the discharge resistance of the discharge resistance exerting member 430 is decreased. In the example of FIG. 9, it is also understandable that the adjustment of the discharge resistance can be performed in four stages.

As described, the pulp discharge resistance can be set to any of a plurality of conditions based on rotational operation of the discharge resistance adjusting member 420. Accordingly, it is possible to accomplish the condition for extraction that is suitable for the type of the subject being extracted or for user preference.

As exemplified above, the discharge resistance adjusting member 420 may have four flat edge surfaces corresponding to four discharge resistances, but exemplary embodiments are not limited thereto. Accordingly, in alternative embodiments, three, five, six or various other number of flat edge surfaces may be employed. Further, as exemplified in the present embodiment, the discharge resistance adjusting member 420 may have a plurality of flat edge surfaces corresponding to a plurality of discharge resistances on the outer circumferential surface 424 of the discharge resistance adjusting member 420, but exemplary embodiments are not limited thereto. Accordingly, in alternative embodiments, the flat edge surfaces may be modified to curved surfaces.

The mounting member 410 is a component provided to fix the pulp discharge adjusting apparatus 400 with respect to the pulp discharge port 121. As illustrated in FIG. 7, the mounting member 410 has a coupling protrusion 413 formed on an inner surface to be inserted into the coupling hole 442 of the connecting member 440 described above. The mounting member 410 and the connecting member 440 may be connected with each other by the coupling of the coupling protrusion 413 and the coupling hole 442.

The mounting member 410 has a fixing segment 415 on an outer surface to be coupled with the fixing protrusion 125 of the pulp discharge port 121. The mounting member 410 can be fixed to the pulp discharge port 121 by the coupling of the fixing protrusion 125 and the fixing segment 415.

With the connecting member 440, the discharge resistance exerting member 430, the discharge resistance adjusting member 420, and the mounting member 410 may be constructed as one single assembly. Accordingly, the pulp discharge adjusting apparatus 400, which is connected with the respective components 410, 420, 430, 440 through the connecting member 440 as one single assembly, may be attached to, or detached from the pulp discharge port 121. This means that attaching or detaching the pulp discharge adjusting apparatus 400 can each be performed by only one operation. Accordingly, attaching and detaching the pulp discharge adjusting apparatus 400 is very convenient to perform, and convenience of cleaning the drum assembly 100 is also enhanced.

### Third and fourth exemplary embodiments

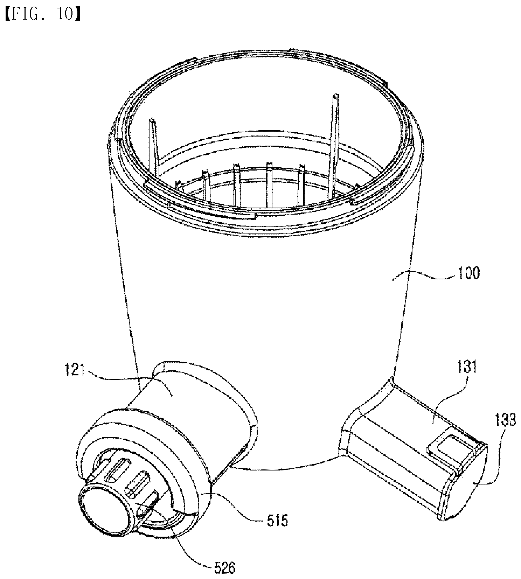

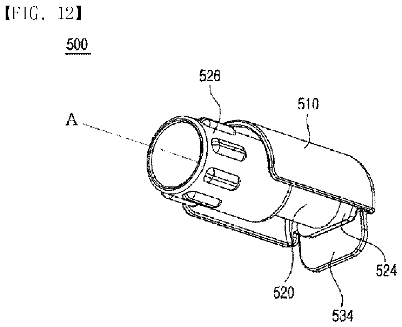

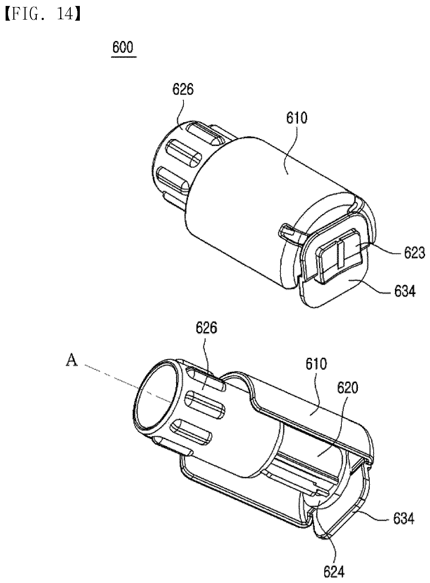

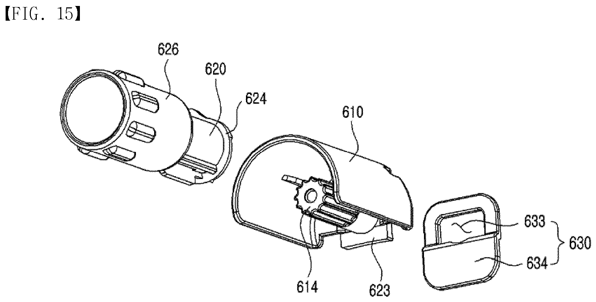

FIGS. 10 to 13 illustrate a drum assembly according to a third exemplary embodiment, and FIGS. 14 to 16 illustrate a drum assembly according to a fourth exemplary embodiment.

The drum assembly of the third exemplar embodiment and the drum assembly of the fourth exemplary embodiment have only difference in the configurations of the discharge resistance adjusting members 520, 620 and the contacting portions 523, 624. Hereinbelow, the drum assemblies according to the third and the fourth exemplary embodiments will be explained together.

The drum assembly according to the third exemplary embodiment includes a drum body 100 and a pulp discharge adjusting apparatus 500. Likewise, the drum assembly according to the fourth exemplary embodiment includes a drum body 100 and a pulp discharge adjusting apparatus 600.

According to the third and the fourth exemplary embodiments, the drum body 100 has the same structure as the drum body 100 according to the second exemplary embodiment described above. Accordingly, the drum body 100 will not be described in detail below.

According to the third exemplary embodiment, the pulp discharge adjusting apparatus 500 includes a discharge resistance exerting member 530, a connecting member 510, a discharge resistance adjusting member 520 and a mounting member 515.

Similarly, the pulp discharge adjusting apparatus 600 according to the fourth exemplar embodiment includes a discharge resistance exerting member 630, a connecting member 610, a discharge resistance adjusting member 620, and a mounting member (not illustrated).

Each of the discharge resistance exerting members 530, 630 has the same structure and disposition as the discharge resistance exerting member 420 according to the second exemplary embodiment. Accordingly, the discharge resistance exerting members 530, 630 each includes an elastically deformable portion 534, 634 and an insertion hole 533, 633 for coupling with the connecting member 540, 640.

Each of the connecting members 510, 610 includes an inserting portion 623 for coupling with the inserting hole 533, 633 and a shaft portion 614 for coupling with the discharge resistance adjusting member 520, 620.

Each of the discharge resistance adjusting members 520, 620 is provided to adjust discharge resistance of the discharge resistance exerting member 530, 630. Accordingly, the discharge resistance adjusting member 520, 620 is operated by a user for discharge resistance adjustment.

Each of the discharge resistance adjusting members 520, 620 includes an operating portion 526, 626 for the user to operate, and a contacting portion 524, 624 provided on an inner end of the operating portion 526, 626. Referring to FIG. 10, the operating portion 526, 626 is partially exposed out of the pulp discharge port 121 for the user's convenience of handling the same. Meanwhile, the contacting portion 524, 624 is disposed in a contact with an upper region of the elastically deformable portion 534, 634.

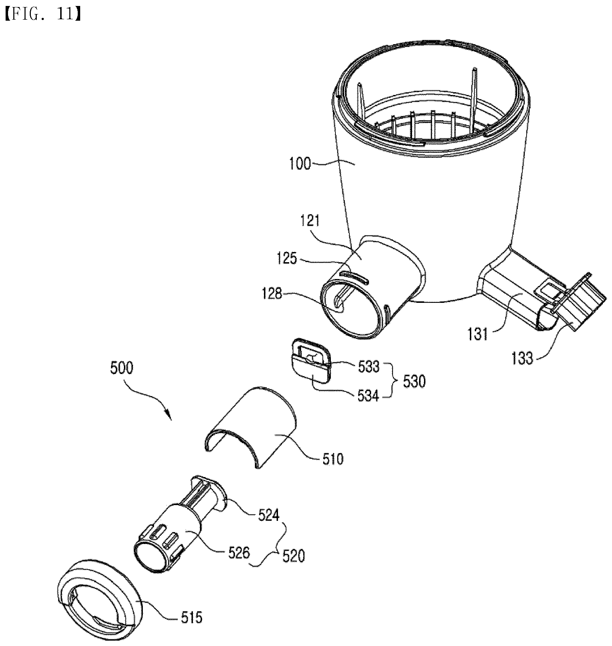

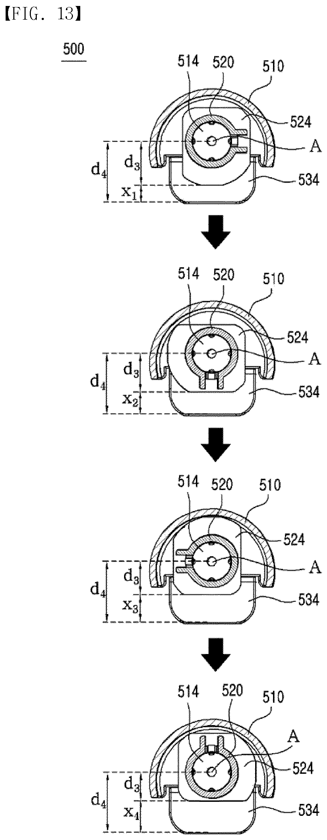

Referring to FIGS. 11 and 13, the contacting portion 524 according to the third exemplary embodiment is provided as an approximately plate form. An outer circumferential surface of the contacting portion 524 includes a plurality of flat edge surfaces at different distances d3 from the axis of rotation A. In FIG. 13, a reference symbol d4 refers to a distance between the axis of rotation A and a lower end of the elastically deformable portion 534.

As illustrated in FIG. 13, according to the rotation of the discharge resistance adjusting member 520, the distance x1, x2, x3, x4 between the lower end of the contacting portion 524 and the lower end of the elastically deformable portion 534 may vary into four stages. As the distance x1, x2, x3, x4 varies, the discharge resistance of the elastically deformable portion 534 varies. Specifically, an increase in the distance x1, x2, x3, x4 leads into a decrease in the discharge resistance, while a decrease in the distance x1, x2, x3, x4 leads into an increase in the discharge resistance. As exemplified in the third exemplary embodiment, the four flat edge surfaces may be provided, but it is of course possible that the number of the flat edge surfaces can be modified.

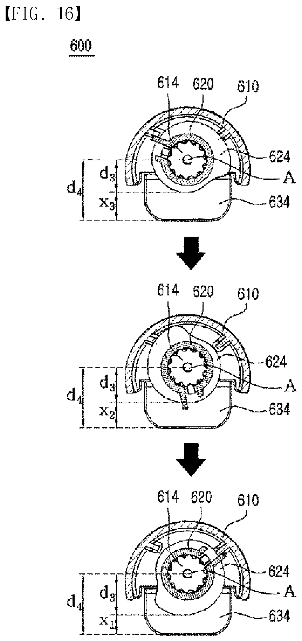

Referring to FIGS. 14 and 16, the contacting portion 624 according to the fourth exemplary embodiment is provided as an approximately plate shape. An outer circumferential surface of the contacting portion 624 is formed as a curved surface which has a variable distance from the axis of rotation A.

As illustrated in FIG. 16, the rotation of the discharge resistance adjusting member 620 allows a distance x1, x2, x3 between the lower end of the contacting portion 624 and the lower end of the elastically deformable portion 634 to be varied into three stages. As the distance x1, x2, x3 varies, the discharge resistance of the elastically deformable portion 534 varies. As exemplified in the fourth exemplary embodiment, the distance x1, x2, x3 may be varied into three stages, but exemplary embodiments are not limited thereto. Accordingly, the number of variable stages may be varied, according to modifications in the design of the outer circumferential surface of the contacting portion 624.

The mounting members 515 is each provided to fix the pulp discharge adjusting apparatus 500, 600 with respect to the pulp discharge port 121. The mounting member 515 may be coupled with the connecting member 510, 610 by fastening manner such as screw fastening, or alternatively, may be integrally formed with the corresponding connecting member 510, 610. A fixing projection (not illustrated) for coupling with the fixing protrusion 125 of the pulp discharge port 121 is provided on an inner side surface of the mounting member 515.

Similarly to the pulp discharge adjusting apparatuses 300, 400 described above according to the first and the second exemplary embodiments, the pulp discharge adjusting apparatuses 500, 600 according to the third and the fourth exemplary embodiments are attachable to the pulp discharge port 121 as a one single assembly state. This means that attaching and detaching the pulp discharge adjusting apparatuses 500, 600 is very convenient to perform, and that convenience of cleaning the drum assembly 100 can be enhanced accordingly.

### Fifth exemplary embodiment

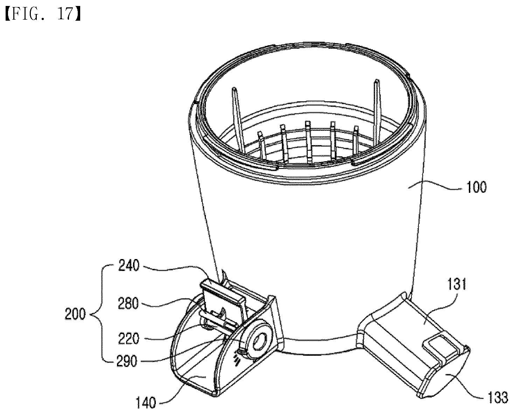

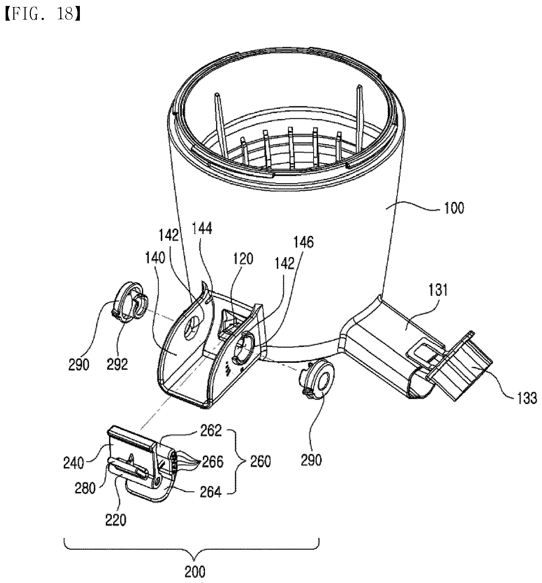

The drum assembly according to the fifth exemplary embodiment will be explained with reference to FIGS. 17 to 19.

According to the fifth exemplary embodiment, the drum assembly includes a drum body 100 and a pulp discharge adjusting apparatus 200.

The drum body 100 has an approximately cylindrical container structure in which an extraction screw (not illustrated) is received. The drum body 100 includes a juice discharge port 131 and a pulp discharge port 140. The juice discharge port 131 has a lid 133 to open and close the same. The pulp discharge port 140 is in fluid communication with the pulp discharge opening 120. The pulp discharge port 140 has a shape with an open upper side.

The pulp discharge adjusting apparatus 200 includes an opening/closing member 260 to open and close the pulp discharge opening 120, an operating member coupled with the opening/closing member 260 and rotatably engaged with the pulp discharge port 140, and a pair of coupling members 290 to couple the operating member 240 with the pulp discharge port 140.

The opening/closing member 260 is received in the pulp discharge port 140, and is disposed to face with the pulp discharge opening 120. The opening/closing member 260 includes a connecting portion 262 connected with the operating member 240, and an opening/closing portion 264 for opening and closing the pulp discharge opening 120. A plurality of protrusions 266 are formed on the side surface of the connecting portion 262. When the opening/closing member 260 is rotated, the angle of rotation of the opening/closing member 260 may be set to a desired angle by the interaction between the plurality of protrusions 266 and locking jaws 144 provided on the pulp discharge port 140. The opening/closing portion 264 may be provided as a curved form, and the pulp discharge opening 120 may be provided as a curved form to correspond to the same.

The operating member 240 is received in the pulp discharge port 140 and has an approximately rectangular shape. The operating member 240 includes a coupling portion 220 coupled with a coupling member 290, and a protecting protrusion 280 provided on an outer surface of the operating member 240. The protecting protrusion 280 is provided to prevent a user's finger from entering the pulp discharge opening 120 while the opening/closing member 260 is opening the pulp discharge opening 120. In an exemplary embodiment in which an upper side of the pulp discharge port 140 is open, it is particularly necessary to prevent the user's finger from touching the extraction screw.

The coupling member 290 is coupled with the pulp discharge port 140 through a coupling hole 142. The operating member 240 described above is rotatably mounted to the pulp discharge port 140 by being coupled with a pair of coupling members 290. A locking jaw 292 is formed on the coupling member 290 and there is a locking protrusion 146 in the coupling hole 142 for interacting with the locking jaw 292. When the opening/closing member 260 is rotated, the locking jaws 292 are locked in both ends of the locking protrusion 146, thus limiting the range of rotatable movement of the opening/closing member 260. Accordingly, the opening/closing member 260 can be rotated within a predetermined angle range by the locking protrusion 146.

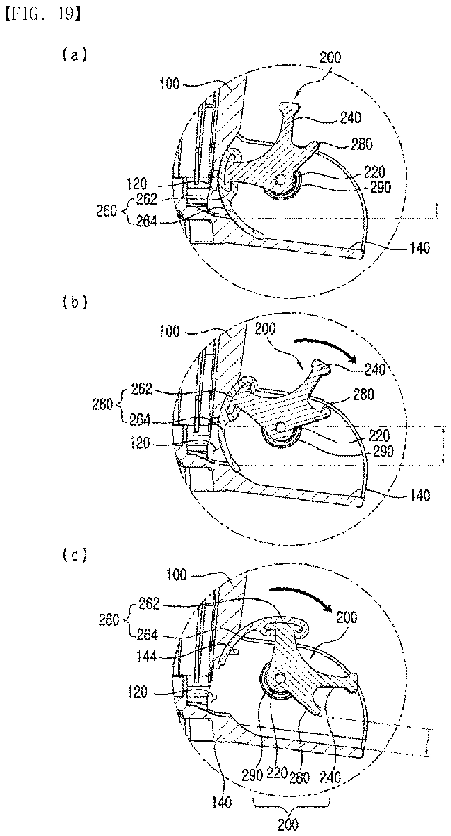

As illustrated in FIG. 19, the opening degree of the pulp discharge opening 120 by the opening/closing member 260 can be adjusted according to the rotation of the operating member 240, and accordingly, an amount of pulp discharged from the pulp discharge opening 120 can be adjusted.

The pulp discharge opening 120 has a minimum opening degree when the opening/closing member 260 is in the position of FIG. 19(a), while the pulp discharge opening 120 has a maximum opening degree when the opening/closing member 260 is in the position of FIG. 19(c). Further, the opening/closing member 260 may be at one or more intermediate opening positions as illustrated in FIG. 19(b). Accordingly, it is enabled to adjust the amount of discharge pulp from the pulp discharge opening 120 into three or more stages by rotating the opening/closing member 260 with the operating member 240.

### Sixth exemplary embodiment

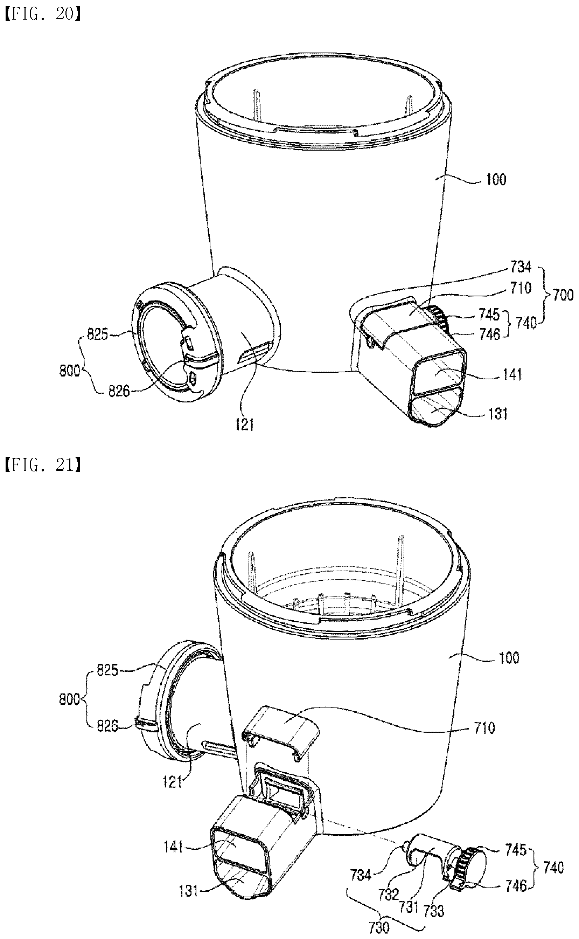

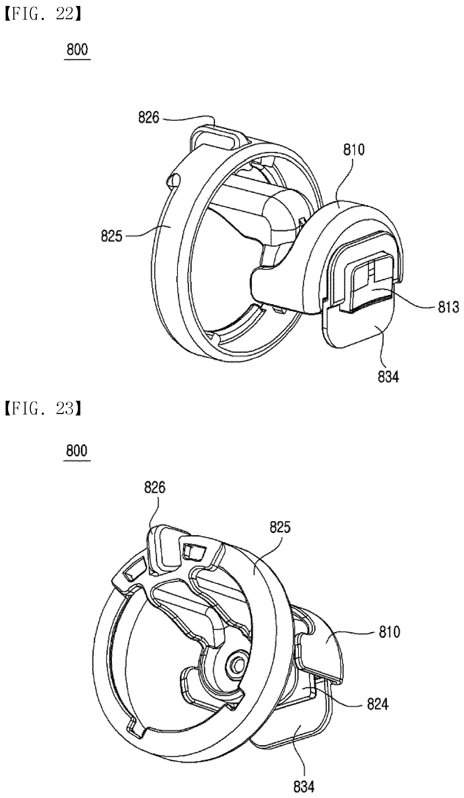

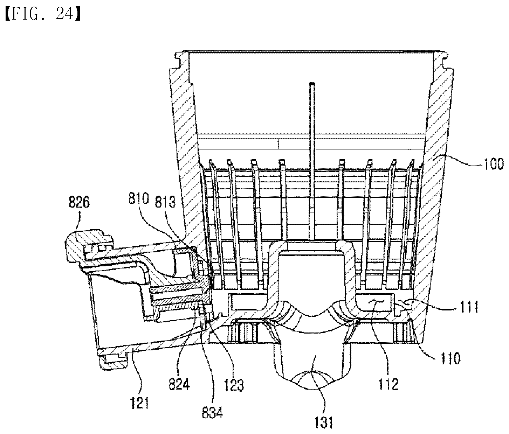

The drum assembly according to the sixth exemplary embodiment will be explained with reference to FIGS. 20 to 29.

According to the sixth exemplary embodiment, the drum assembly includes a drum body 100, a first pulp discharge adjusting apparatus 800, and a second pulp discharge adjusting apparatus 700.

The drum body 100 includes a juice discharge port 131, a first pulp discharge port 121, and a second pulp discharge port 141. As illustrated in FIG. 20, the second pulp discharge port 141 is disposed immediately over the juice discharge port 131. Accordingly, both the juice discharged from the juice discharge port 131 and the pulp discharged from the second pulp discharge port 141 may be discharged simultaneously into one single container. As illustrated in FIG. 21, a mounting hole is formed on an inner end of the second pulp discharge port 141 to mount the first pulp discharge adjusting apparatus 700.

Further, the drum body 100 includes a guiding jaw 110 protruding from an inner bottom surface in a circular cross section of a predetermined diameter, a first guide groove 111 formed outside the guiding jaw 110, a second guide groove 112 formed within the guiding jaw 110, a first pulp discharge opening 123 connecting the first guide groove 111 with the first pulp discharge port 121, a second pulp discharge opening 143 connecting the first guide groove 111 with the second pulp discharge port 141, and a juice discharge opening 133 connecting the second guide groove 112 with the juice discharge port 131.

The juice separated from the subject being extracted within the drum body 100 may be discharged through the second guide groove 112, the juice discharge opening 133 and the juice discharge port 131. Meanwhile, the pulp separated from the subject being extracted within the drum body 100 may be discharged outside through the first guide groove 111, the first pulp discharge opening 123 and the first pulp discharge port 121, or discharged outside through the first guide groove 111, the second pulp discharge opening 143 and the second pulp discharge port 141. The amount of the pulp discharged outside through the first pulp discharge port 121 may be adjusted by the first pulp discharge adjusting apparatus 800, and the amount of the pulp discharged outside through the second pulp discharge port 141 may be adjusted by the second pulp discharge adjusting apparatus 700.

According to the sixth exemplary embodiment, the first pulp discharge adjusting apparatus 800 includes a discharge resistance exerting member 834, a connecting member 810 and a discharge resistance operating member 825.

The discharge resistance exerting member 834 is provided to exert discharge resistance on the pulp being discharged through the first pulp discharge opening 123, and may have the same structure as the discharge resistance exerting member 430 according to the second exemplary embodiment described above (see FIG. 6).

The connecting member 810 connects the discharge resistance exerting member 834 with the discharge resistance operating member 825, and rotatably supports the discharge resistance operating member 825. An inserting portion 813 for insertion into the discharge resistance exerting member 834 is provided on an inner end of the connecting member 810.

The discharge resistance operating member 825 is rotatably mounted on the first pulp discharge port 121. An operating protrusion 826 is provided on an outer end of the discharge resistance operating member 825 for convenience of the user. A contacting portion 824 is provided on an inner end of the discharge resistance operating member 825 in contact with the discharge resistance exerting member 834. The contacting portion 834 may have the same shape as the contacting portion 524 illustrated and described above with reference to the exemplary embodiment of FIG. 13, or as the contacting portion 624 illustrated and described above with reference to the exemplary embodiment of FIG. 16.

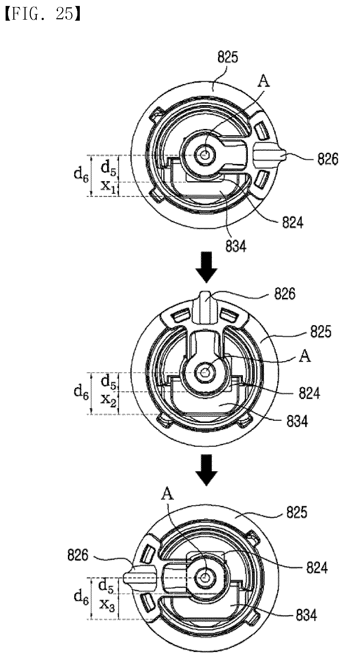

As illustrated in FIG. 25, a distance x1, x2, x3 between a lower end of the contacting portion 824 and a lower end of the discharge resistance exerting member 834 may vary, as the discharge resistance operating member 825 is rotated. According to an exemplary embodiment, the distance x1, x2, x3 may be varied into three stages, and accordingly, the discharge resistance exerted by the discharge resistance exerting member 834 may be varied into three stages. As such, it is possible to adjust an amount of pulp discharged from the first pulp discharge port 121 by adjusting the discharge resistance. In FIG. 25, a reference symbol d6 denotes a distance between an axis of rotation A and the lower end of the discharge resistance exerting member 834, and d5 denotes a distance between the axis of rotation A and the lower end of the contacting portion 824.

According to the sixth exemplary embodiment, the second pulp discharge adjusting apparatus 700 includes an opening/closing member 730, an operating member 740 and a cover member 710.

The opening/closing member 730 is provided to open and close the second pulp discharge opening 143 and is so disposed as to face the second pulp discharge opening 143. The opening/closing member 730 includes a cover portion 731 and a pair of side portions 732. One of the pair of side portions 733 may have a rotation restricting protrusion 733 to set a range of rotation of the opening/closing member 730.

The opening/closing member 730 is rotatably mounted on the second pulp discharge port 141, and shielded by the cover member 710 from exposure to outside. The cover member 710 may be formed of a transparent material so that the opening/closing member 730 is seen through from outside.

The operating member 740 is provided to rotatably operate the opening/closing member 730, and is connected to one of the pair of side portions 732. The operating member 740 includes a body portion 745 and a detecting protrusion 746 formed on its outer circumference. The body portion 745 may have a shape of a disk. The user can perceive the angle of rotation of the opening/closing member 730 from the location of a detecting protrusion 746. The detecting protrusion 746 may be omitted, when cover member 710 is formed of a transparent material.

As the operating member 740 is rotated by the operating of the user, the opening degree of the second pulp discharge opening 143 can be adjusted by the opening/closing member 730, and accordingly, the amount of pulp discharged outside from the second pulp discharge port 141 can be adjusted.

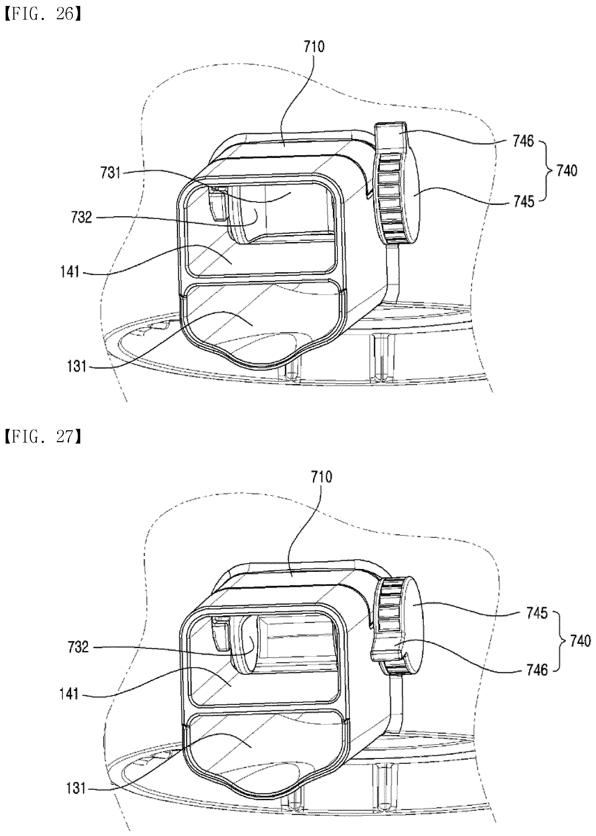

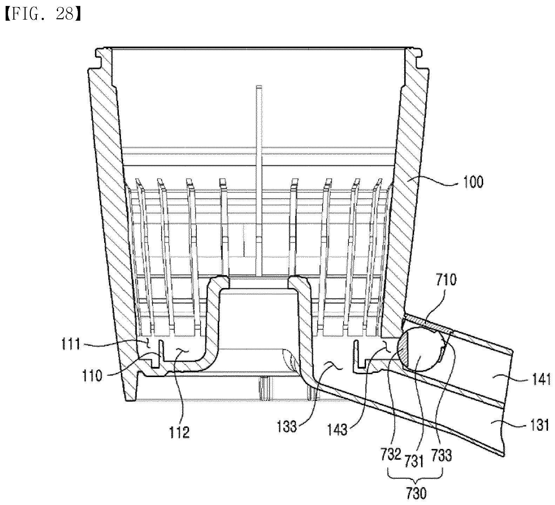

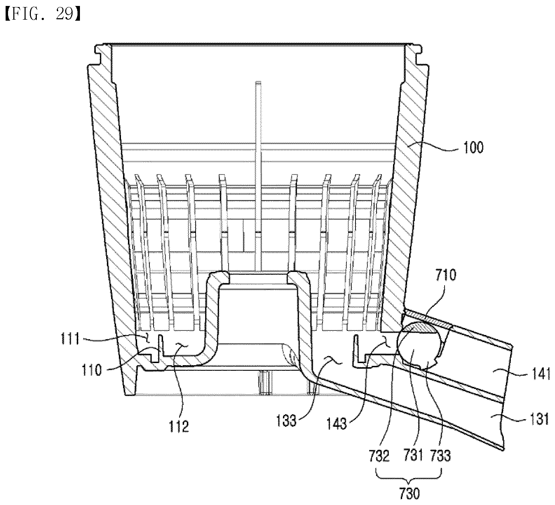

FIGS. 26 and 28 illustrate the second pulp discharge opening 143 in the minimum opening state, and FIGS. 27 and 29 illustrate the second pulp discharge opening 143 in the maximum opening state.

The user is able to adjust the amount of pulp discharged outside through the first and the second pulp discharge ports 121, 141 by using the first and the second pulp discharge adjusting apparatuses 800, 700. It is particularly enabled to adjust the amounts of the pulp and the juice discharged into one single container at a variety of mixing ratios, by adjusting the amount of pulp discharge of the second pulp discharge port 141 which is at the same location as the juice discharge port 131.

## Claims

1. A drum assembly for a juicer, comprising:
a drum body (100) having a juice discharge port (131) and at least one pulp discharge port (121); and
a pulp discharge adjusting apparatus (300) mounted on the pulp discharge port (121) to adjust an amount of pulp discharge
wherein the pulp discharge adjusting apparatus (300) comprises:
a discharge resistance exerting member (330) installed in the pulp discharge port (121) to exert a discharge resistance on a pulp being discharged through the pulp discharge port (121), and having an elastically deformable portion (334) which is elastically deformable by pressing of the pulp being discharged; and
a discharge resistance adjusting member (320) operated by a user to adjust the discharge resistance, and
a connecting member (310) coupled with the discharge resistance exerting member (330) and the discharge resistance adjusting member (320), respectively, and guiding a movement of the discharge resistance adjusting member (320) during adjustment of the discharge resistance;
**characterized in that**
the connecting member (310) is attachable to or detachable from the pulp discharge port (121) in a state of being coupled with the discharge resistance exerting member (330) and the discharge resistance adjusting member (320).

2. The drum assembly for a juicer of claim 1, wherein the discharge resistance adjusting member (320) is coupled with the connecting member (310) such that the discharge resistance adjusting member (320) is slidable between a first position of contacting an outer surface of the elastically deformable portion (334) and a second position of being spaced from the outer surface of the elastically deformable portion (334).

3. The drum assembly for a juicer of claim 1, wherein the discharge resistance adjusting member (320) is disposed to be in contact with an upper region of the elastically deformable portion (334) and is rotatably coupled with the connecting member (310), and
the discharge resistance adjusting member (320) has a shape with a variable distance between a lower end of the discharge resistance adjusting member (320) and a lower end of the elastically deformable portion (334) according to a rotation thereof.

4. The drum assembly for a juicer of claim 3, wherein the discharge resistance adjusting member (320) has a shape of a ring penetrated by the connecting member (310), and an outer circumferential surface of the discharge resistance adjusting member (320) comprises a plurality of flat edge surfaces at different distances from an axis of rotation.

5. The drum assembly for a juicer of claim 3, wherein the discharge resistance adjusting member (520, 620) comprises:
an operating portion (526, 626) rotatably coupled with the connecting member (510, 610) and partially exposed outside the pulp discharge port (121); and
a contacting portion (524, 624) provided on an inner end of the operating portion (526, 626) and disposed to be in contact with the upper region of the elastically deformable portion (534, 634).

6. The drum assembly for a juicer of claim 5, wherein the contacting portion (524, 624) is provided as a plate shape, and an outer circumferential surface of the contacting portion (524, 624) comprises a plurality of flat edge surfaces at different distances from an axis of rotation.

7. The drum assembly for a juicer of claim 5, wherein the contacting portion (524, 624) is provided as a plate shape, and an outer circumferential surface of the contacting portion (524, 624) is formed as a curved surface at a variable distance from an axis of rotation.

## Patentansprüche

1. Trommelanordnung für einen Entsafter, umfassend:
einen Trommelkörper (100), der eine Saftaustragsöffnung (131) und zumindest eine Fruchtfleischaustragsöffnung (121) aufweist; und
eine Fruchtfleischaustrags-Einstellvorrichtung (300), die an der Fruchtfleischaustragsöffnung (121) angebracht ist, um einen Betrag des Fruchtfleischaustrags einzustellen;
wobei die Fruchtfleischaustrags-Einstellvorrichtung (300) umfasst:
ein einen Austragswiderstand ausübendes Element (330), das in der Fruchtfleischaustragsöffnung (121) installiert ist, um einen Austragswiderstand auf ein durch die Fruchtfleischaustragsöffnung (121) ausgetragenes Fruchtfleisch auszuüben, und das einen elastisch verformbaren Abschnitt (334) aufweist, der durch Pressen des ausgetragenen Fruchtfleisches elastisch verformbar ist; und
ein Austragswiderstands-Einstellelement (320), das von einem Benutzer betätigt wird, um den Austragswiderstand einzustellen, und
ein Verbindungselement (310), das jeweils mit dem einen Austragswiderstand ausübenden Element (330) und dem Austragswiderstands-Einstellelement (320) gekoppelt ist und eine Bewegung des Austragswiderstands-Einstellelements (320) während der Einstellung des Austragswiderstands führt;
**dadurch gekennzeichnet, dass**
das Verbindungselement (310) an der Fruchtfleischaustragsöffnung (121) in einem Zustand, in dem es mit dem einen Austragswiderstand ausübenden Element (330) und dem Austragswiderstands-Einstellelement (320) gekoppelt ist, an der Fruchtfleischaustragsöffnung (121) befestigbar oder von dieser lösbar ist.

2. Trommelanordnung für einen Entsafter nach Anspruch 1, wobei das Ausstoßwiderstands-Einstellelement (320) mit dem Verbindungselement (310) so gekoppelt ist, dass das Austragswiderstands-Einstellelement (320) zwischen einer ersten Position, in der es mit einer Außenfläche des elastisch verformbaren Abschnitts (334) in Kontakt ist, und einer zweiten Position, in der es von der Außenfläche des elastisch verformbaren Abschnitts (334) beabstandet ist, verschiebbar ist.

3. Trommelanordnung für einen Entsafter nach Anspruch 1, wobei das Austragswiderstands-Einstellelement (320) so angeordnet ist, dass es in Kontakt mit einem oberen Bereich des elastisch verformbaren Abschnitts (334) steht und drehbar mit dem Verbindungselement (310) gekoppelt ist, und
das Austragswiderstands-Einstellelement (320) eine Form aufweist mit einem variablen Abstand zwischen einem unteren Ende des Austragswiderstands-Einstellelements (320) und einem unteren Ende des elastisch verformbaren Abschnitts (334) entsprechend einer Drehung desselben.

4. Trommelanordnung für einen Entsafter nach Anspruch 3, wobei das Austragswiderstands-Einstellelement (320) die Form eines Rings aufweist, der von dem Verbindungselement (310) durchdrungen wird, und eine äußere Umfangsfläche des Austragswiderstands-Einstellelements (320) eine Vielzahl von flachen Kantenflächen in unterschiedlichen Abständen von einer Drehachse umfasst.

5. Trommelbaugruppe für einen Entsafter nach Anspruch 3, wobei das Austragswiderstands-Einstellelement (520, 620) umfasst:
einen Betätigungsabschnitt (526, 626), der drehbar mit dem Verbindungselement (510, 610) gekoppelt ist und teilweise außerhalb der Fruchtfleischaustragsöffnung (121) freiliegt; und
einen Kontaktabschnitt (524, 624), der an einem inneren Ende des Betätigungsabschnitts (526, 626) vorgesehen und so angeordnet ist, dass er mit dem oberen Bereich des elastisch verformbaren Abschnitts (534, 634) in Kontakt steht.

6. Trommelanordnung für einen Entsafter nach Anspruch 5, wobei der Kontaktabschnitt (524, 624) in Plattenform vorgesehen ist und eine Außenumfangsfläche des Kontaktabschnitts (524, 624) eine Vielzahl von flachen Randflächen in unterschiedlichen Abständen von einer Drehachse umfasst.

7. Trommelanordnung für einen Entsafter nach Anspruch 5, wobei der Kontaktabschnitt (524, 624) in Plattenform vorgesehen ist und eine Außenumfangsfläche des Kontaktabschnitts (524, 624) als gekrümmte Fläche in einem variablen Abstand von einer Drehachse ausgebildet ist.

## Revendications

1. Ensemble tambour pour une centrifugeuse comprenant :
un corps de tambour (100) ayant un orifice d'évacuation de jus (131) et au moins un orifice d'évacuation de pulpe (121) ; et
un appareil d'ajustement d'évacuation de pulpe (300) monté sur l'orifice d'évacuation de pulpe (121) afin d'ajuster une quantité d'évacuation de pulpe,
dans lequel l'appareil d'ajustement d'évacuation de pulpe (300) comprend :
un élément exerçant une résistance d'évacuation (330) installé dans l'orifice d'évacuation de pulpe (121) afin d'exercer une résistance d'évacuation sur la pulpe qui est évacuée par l'orifice d'évacuation de pulpe (121), et ayant une partie élastiquement déformable (334) qui est élastiquement déformable par la pression de la pulpe qui est évacuée ; et
un élément d'ajustement de résistance d'évacuation (320) actionné par un utilisateur afin d'ajuster la résistance d'évacuation, et
un élément de raccordement (310) couplé avec l'élément exerçant une résistance d'évacuation (330) et l'élément d'ajustement de résistance d'évacuation (320) respectivement, et guidant un mouvement de l'élément d'ajustement de résistance d'évacuation (320) pendant l'ajustement de la résistance d'évacuation ;
**caractérisé en ce que** :
l'élément de raccordement (310) peut être fixé ou détaché de l'orifice d'évacuation de pulpe (121) dans un état dans lequel il est couplé avec l'élément exerçant une résistance d'évacuation (330) et l'élément d'ajustement de résistance d'évacuation (320).

2. Ensemble tambour pour une centrifugeuse selon la revendication 1, dans lequel l'élément d'ajustement de résistance d'évacuation (320) est couplé avec l'élément de raccordement (310) de sorte que l'élément d'ajustement de résistance d'évacuation (320) peut coulisser entre une première position de contact avec une surface externe de la partie élastiquement déformable (334) et une seconde position dans laquelle il est espacé de la surface externe de la partie élastiquement déformable (334).

3. Ensemble tambour pour une centrifugeuse selon la revendication 1, dans lequel l'élément d'ajustement de résistance d'évacuation (320) est disposé pour être en contact avec une région supérieure de la partie élastiquement déformable (334) et est couplé en rotation avec l'élément de raccordement (310), et
l'élément d'ajustement de résistance d'évacuation (320) a une forme avec une distance variable entre une extrémité inférieure de l'élément d'ajustement de résistance d'évacuation (320) et une extrémité inférieure de la partie élastiquement déformable (334) selon sa rotation.

4. Ensemble tambour pour une centrifugeuse selon la revendication 3, dans lequel l'élément d'ajustement de résistance d'évacuation (320) a une forme d'anneau pénétré par l'élément de raccordement (310), et une surface circonférentielle externe de l'élément d'ajustement de résistance d'évacuation (320) comprend une pluralité de surfaces de bord plates à différentes distances d'un axe de rotation.

5. Ensemble tambour pour une centrifugeuse selon la revendication 3, dans lequel l'élément d'ajustement de résistance d'évacuation (520, 620) comprend :
une partie de commande (526, 626) couplée en rotation avec l'élément de raccordement (510, 610) et partiellement exposée à l'extérieur de l'orifice d'évacuation de pulpe (121) ; et
une partie de contact (524, 624) prévue sur une extrémité interne de la partie de commande (526, 626) et disposée pour être en contact avec la région supérieure de la partie élastiquement déformable (534, 634).

6. Ensemble tambour pour une centrifugeuse selon la revendication 5, dans lequel la partie de contact (524, 624) est prévue selon une forme de plaque, et une surface circonférentielle externe de la partie de contact (524, 624) comprend une pluralité de surfaces de bord plates à différentes distances d'un axe de rotation.

7. Ensemble tambour pour une centrifugeuse selon la revendication 5, dans lequel la partie de contact (524, 624) est prévue selon une forme de plaque, et une surface circonférentielle externe de la partie de contact (524, 624) est formée comme une surface incurvée à une distance variable d'un axe de rotation.
